# EUROPÄISCHE PATENTSCHRIFT

(11) **EP 3 029 334 B1**
(45) Veröffentlichungstag und Bekanntmachung des Hinweises auf die Patenterteilung: **07.07.2021**
(21) Anmeldenummer: 15189338.5
(22) Anmeldetag: 12.10.2015
(51) Int. Cl.: F04D 29/08, F04D 29/42, F16J 15/06, F04D 1/06, F04D 29/62

(54) **AXIAL GETEILTE PUMPE**
AXIALLY SPLIT PUMP
POMPE À SÉPARATION AXIALE

(30) Priorität: 05.12.2014 EP 14196441
(43) Veröffentlichungstag der Anmeldung: 08.06.2016
(73) Patentinhaber: Sulzer Management AG, 8401 Winterthur (CH)
(72) Erfinder: Welschinger, Thomas, 78315 Radolfzell (DE); Tischler, Heike, 8406 Winterthur (CH); Vogel, Berthold, 71701 Schwieberdingen (DE)
(74) Vertreter: IPS Irsch AG

(56) Entgegenhaltungen:
- EP-A1- 2 636 905
- WO-A1-2014/083374
- WO-A1-2014/095787
- JP-U- S6 375 665
- JP-Y2- S6 224 079
- None

## Beschreibung

Die Erfindung betrifft eine axial geteilte Pumpe zum Fördern eines Fluids gemäss dem Oberbegriff des unabhängigen Patentanspruchs.

Axial geteilte Pumpen, die auch als horizontal geteilte Pumpen bezeichnet werden, sind Pumpen, bei denen das Gehäuse parallel zur Achse der Welle geteilt ist und somit ein Unterteil und einen Deckel aufweist. Sowohl das Unterteil als auch der Deckel weisen jeweils einen Flansch auf, die zur Montage der Pumpe aufeinandergelegt und dann fest miteinander verbunden, beispielsweise verschraubt, werden.

Axial geteilte Pumpen sind seit langem wohl bekannt und werden in zahlreichen Ausführungsformen meist als Zentrifugalpumpen hergestellt, beispielsweise als ein- oder doppelflutige Pumpen und als einstufige oder mehrstufige Pumpen. Dabei kann das Laufrad der Pumpe zwischen zwei Lagern angeordnet sein (Between-bearing-Pump). Auch der Anwendungsbereich dieser Pumpen ist sehr breit, sie werden zum Beispiel in der Öl- und Gasindustrie oder in der Wasserindustrie oder im Bereich der Energieerzeugung eingesetzt. Häufig sind axial geteilte Pumpen für einen hohen Betriebsdruck oder grosse Volumenströme ausgelegt und eignen sich zum Pumpen über grosse geodätische Höhen, zum Fördern durch Wasser- oder Ölpipelines oder zur Meerwasserentsalzung mittels Umkehrosmose.

Bei axial geteilten Pumpen kommt natürlich der Abdichtung zwischen dem Unterteil und dem Deckel des Gehäuses entlang der beiden Flansche eine entscheidende Bedeutung zu. Hierbei gilt es zum einen, den Innenraum der Pumpe gegen die Umgebung abzudichten und zum anderen im Innenraum der Pumpe solche Druckräume gegeneinander abzudichten, in denen im Betriebszustand unterschiedliche Drücke herrschen, wie dies beispielsweise bei mehrstufigen Pumpen der Fall ist.

Zum Dichten zwischen dem Unterteil und dem Deckel ist es bekannt, insbesondere für Anwendungen mit hohem Druck, eine Flachdichtung zwischen den beiden Flanschen einzulegen, sodass sich die beiden Flansche im montierten Zustand nicht direkt berühren, sondern beidseitig die Flachdichtung kontaktieren. Solche Flachdichtungen erfordern eine hohe Vorspannung, insbesondere auch, um die erforderliche Flächenpressung zwischen Unterteil, Deckel und der Flachdichtung zu erzielen.

Eine alternative Technologie zur Abdichtung zwischen dem Unterteil und dem Deckel, wie sie beispielsweise auch in der WO-A-2014/083374 beschrieben ist, besteht darin, die Flansche des Unterteils und des Oberteils ohne dazwischenliegende Dichtung direkt aufeinander zu montieren. Die jeweiligen Oberflächen der beiden Flansche bilden dann Dichtflächen, die im montierten Zustand direkten Kontakt miteinander haben. Bei dieser Lösung ist üblicherweise in dem Unterteil oder in dem Deckel oder im Unterteil und im Deckel zumindest eine äussere Dichtungsnut vorgesehen, die sich beidseitig der Welle über die gesamte axiale Länge der Pumpe erstreckt und in die ein schnurförmiges Dichtungselement, beispielsweise ein O-ring-ähnliches Dichtungselement eingelegt ist. Nach Einlegen des schnurförmigen Dichtungselements in die Dichtungsnut werden das Unterteil und der Deckel fest miteinander verschraubt, sodass die Dichtflächen der beiden Flansche in direktem Kontakt miteinander stehen und das schnurförmige Dichtungselement in der Dichtungsnut elastisch verformt wird, um so eine zuverlässige Abdichtung zu gewährleisten.

Da bei dieser Lösung keine Flachdichtung zwischen dem Flansch des Unterteils und dem des Deckels eingelegt ist, haben die Verschraubungen, mit denen das Unterteil und der Deckel aneinander befestigt werden, eine deutlich geringere Last zu tragen. Hieraus resultieren einige Vorteile: So können die Flansche, welche die Dichtflächen bilden, deutlich dünner und schmaler ausgestaltet werden, es wird weniger Material für die Flansche benötigt, was eine Kosten- und eine Gewichtsersparnis mit sich bringt, für die Verschraubung von Unterteil und Deckel können kleinere Schrauben bzw. Bolzen verwendet werden, diese können daher auch näher an der hydraulischen Kontur platziert werden. Zudem lässt die Verwendung der schnurförmigen Dichtungselemente im Vergleich zu den Flachdichtungen eine höhere Deformation des Gehäuses zu. Dies ist insbesondere bei mehrstufigen Pumpen von Vorteil, weil sich hierdurch die Leckage zwischen verschiedenen Druckräumen in der Pumpe, in welchen unterschiedliche Drücke herrschen, deutlich reduzieren oder sogar vermeiden lässt.

Die schnurförmigen Dichtungselemente sind üblicherweise aus einem Elastomer gefertigt, wie es auch für handelsübliche O-Ringdichtungen verwendet wird, beispielsweise aus dem Nitrilkautschuk Nitril-Butadien-Kautschuk (NBR: Nitrile Butadiene Rubber).

Bei den meisten Anwendungen sind mehr als eine Dichtungsnut mit jeweils einem eingelegten schnurförmigen Dichtungselement vorgesehen. So kann beispielsweise ein inneres schnurförmiges Dichtungselement zur Abdichtung des Saugraums gegen den Druckraum vorgesehen sein und ein äusseres schnurförmiges Dichtungselement, welches den Innenraum der Pumpe gegen die Aussenwelt, also den Umgebungsdruck abdichtet. Insbesondere bei mehrstufigen Pumpen können zusätzliche Dichtungsnuten mit jeweils eingelegten schnurförmigen Elementen vorgesehen sein, um die verschiedenen Druckräume, in denen im Betriebszustand unterschiedliche Drücke herrschen, gegeneinander abzudichten.

Bei der Auslegung solcher Dichtungen mittels schnurförmiger Dichtungselemente ist man bemüht, die individuellen schnurförmigen Dichtungselemente möglichst als geschlossene also insbesondere ringförmige Dichtungselemente zu gestalten, weil die Verbindungs- oder Stossstellen zwischen individuellen schnurförmigen Dichtungselementen potenziell zu Leckagen führen können, insbesondere dann, wenn die Pumpe für einen hohen Betriebsdruck von beispielsweise bis zu 100 bar ausgelegt ist. Allerdings ist es rein konstruktiv nicht möglich, ausschliesslich in sich geschlossene Dichtungsschnüre vorzusehen. Es wird immer solche kritischen Stellen geben, an denen zwei individuelle Dichtungselemente aneinander grenzen oder verbunden werden müssen und für die erwünschte Abdichtung zusammenwirken müssen.

So muss beispielsweise bei einer mehrstufigen Pumpe ein inneres schnurförmiges Dichtungselement, welches der Abdichtung zwischen zwei Stufen dient, mit dem in der äusseren Dichtungsnut eingelegten Dichtungselement verbunden werden. Diese Verbindung muss zuverlässig sein und sollte im Falle von Wartungsarbeiten ohne grossen Aufwand oder Spezialwerkzeuge reparabel sein.

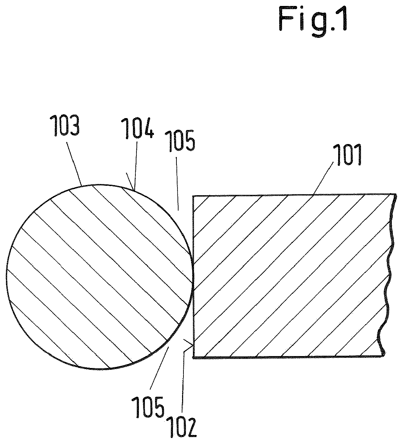

In Fig. 1 ist in einer schematischen Darstellung eine solche kritische Stelle veranschaulicht, an der zwei schnurförmige Dichtungselemente 101 und 103 an einer T-förmigen Verbindungsstelle aneinanderstossen. Die schnurförmigen Dichtungselemente 101, 103 haben üblicherweise einen runden, insbesondere kreisförmigen Querschnitt senkrecht zu ihrer Längserstreckung. An einer T-förmigen Verbindungsstelle stösst dann die planare - also ungewölbte - Endfläche 102 des Dichtungselements 101 auf die gekrümmte Mantelfläche 104 des anderen Dichtungselements 103. Hierbei kommt es zur Ausbildung von im Wesentlichen dreieckförmigen Bereichen 105, in denen die beiden Dichtungselemente 101 und 103 keinen Kontakt mehr haben. Diese Bereiche 105 können zu Leckagen führen, welche die Wirkung der Dichtungsanordnung negativ beeinflussen.

Ausserdem ist aus der EP 2 636 905 A1 eine Dichtungsanordnung zur Anordnung zwischen zwei Bauteilen, die eine plane Kontaktfläche aufweisen, bekannt. Die beiden Bauteile sind als Gehäuseteile eines längs geteilten Gehäuses einer Pumpe ausgeführt. Zur Abdichtung wird ein langgestrecktes, flexibles Dichtelement in Form einer Dichtungsschnur mit einem Endbereich in einer Nut der Kontaktfläche angeordnet. Die Dichtungsschnur ist an ihrem Endbereich in einem gekrümmten Abschlusselement geführt, wobei die Dichtungsschnur und das Abschlusselement derart ausgeführt sind, dass sie im Endbereich der Dichtungsschnur einen Überlappungsbereich aufweisen und damit eine durchgängige Dichtkante bilden.

Ausgehend von dem beschriebenen Stand der Technik ist es daher eine Aufgabe der Erfindung eine axial geteilte Pumpe zum Fördern eines Fluids vorzuschlagen, bei welcher eine zuverlässige Dichtung auch an Verbindungsstellen zwischen Dichtungselementen gewährleistet werden kann.

Der diese Aufgabe lösende Gegenstand der Erfindung ist durch die Merkmale des unabhängigen Patentanspruchs gekennzeichnet.

Erfindungsgemäss wird also eine axial geteilte Pumpe zum Fördern eines Fluids vorgeschlagen, mit einem axial geteilten Gehäuse, welches ein Unterteil und einen Deckel umfasst, wobei das Unterteil eine erste Dichtfläche aufweist und der Deckel eine zweite Dichtfläche, wobei das Unterteil und der Deckel derart aneinander befestigbar sind, dass die beiden Dichtflächen direkten Kontakt miteinander haben, wobei in den Dichtflächen eine erste Dichtungsnut zur Aufnahme eines ersten schnurförmigen Dichtungselements vorgesehen ist, sowie eine zweite Dichtungsnut zur Aufnahme eines zweiten schnurförmigen Dichtungselements, welche zweite Dichtungsnut durch eine Einmündung mit der ersten Dichtungsnut verbunden ist, und wobei in der Einmündung ein Verbindungselement vorgesehen ist, welches zwei laterale Ausnehmungen zur Aufnahme jeweils eines der schnurförmigen Dichtungselemente aufweist, wobei die Ausnehmungen so angeordnet und ausgestaltet sind, dass die beiden schnurförmigen Dichtungselemente im gesamten Bereich des Verbindungselements im wesentlichen parallel verlaufen können.

Vorzugsweise ist dabei in die erste Dichtungsnut ein erstes schnurförmiges Dichtungselement eingelegt und in die zweite Dichtungsnut ist ein zweites schnurförmiges Dichtungselement eingelegt, und jede der zwei lateralen Ausnehmungen des Verbindungselements nimmt jeweils eines der schnurförmigen Dichtungselemente auf.

Die Erfindung basiert auf der anhand von Fig. 1 erläuterten Erkenntnis, dass insbesondere an solchen Kontaktstellen zwischen zwei separaten Dichtungselementen Probleme auftreten können, an denen eine planare - also nicht gewölbte-Endfläche des einen Dichtungselements an einer gekrümmten Fläche, beispielsweise der Mantelfläche eines im Querschnitt kreisförmigen zweiten Dichtungselements anliegt. Diese Geometrie bedingt eine reduzierte Kontaktfläche zwischen den beiden Dichtungselementen, sodass hier leichter Leckagen auftreten können.

Dadurch, dass erfindungsgemäss in der Einmündung das Verbindungselement mit den beiden lateralen Ausnehmungen vorgesehen ist, können die beiden schnurförmigen Dichtungselemente in diesem Bereich parallel zueinander angeordnet werden und haben so über das Verbindungselement eine deutlich vergrösserte effektive Kontaktfläche, was zu einer erheblich verbesserten Dichtwirkung an dieser Verbindungsstelle führt. Es lässt sich also insbesondere auch vermeiden, dass an einer eigentlich T-förmigen Verbindungsstelle eine planare Endfläche eines Dichtungselements auf die gekrümmte Fläche eines anderen Dichtungselements trifft.

Durch die erfindungsgemässe Ausgestaltung kann das Zusammenwirken der Dichtungselemente deutlich verbessert werden, sodass auch insbesondere bei sehr hohem Betriebsdruck eine äusserst zuverlässige Dichtung zwischen den einzelnen Bereichen der Pumpe gewährleistet ist.

Gemäss einem bevorzugten Ausführungsbeispiel nimmt eine der beiden Ausnehmungen ein gerades Ende einer der schnurförmigen Dichtungselemente auf. Diese Anordnung kann die T-förmige Verbindungsstelle zwischen zwei schnurförmigen Dichtungselementen ersetzten. Während das erste Dichtungselement in die eine der beiden Ausnehmungen des Verbindungselements eingelegt wird und durchgängig ist, wird das Ende des rechtwinklig dazu verlaufenden zweiten Dichtungselements in die andere Ausnehmung des Verbindungselements geführt und verläuft dort parallel zu dem ersten Dichtungselement.

Eine besonders vorteilhafte Massnahme besteht darin, wenn jede der Ausnehmungen eine innere Kontur aufweist, welche jeweils der Mantelfläche des jeweiligen schnurförmigen Dichtungselements folgt. Durch diese Massnahme kann sich jedes Dichtungselement jeweils optimal an die innere Kontur der Ausnehmung anschmiegen, woraus eine möglichst grosse Kontaktfläche und damit eine besonders gute Dichtwirkung resultiert.

In der Praxis hat es sich als vorteilhaft erwiesen, wenn die Ausnehmungen in dem Verbindungselement jeweils eine Länge aufweisen, die mindestens so gross ist, wie der dreifache Durchmesser des eingelegten Dichtungselements.

Gemäss einem bevorzugten Ausführungsbeispiel ist jede Dichtungsnut im Unterteil des Gehäuses vorgesehen, was insbesondere eine einfachere Fertigung und eine leichtere Montage ermöglicht.

Vorzugsweise ist das Verbindungselement aus einem Kunststoff gefertigt, beispielsweise ein Spritzgussteil.

Gemäss einem bevorzugten Ausführungsbeispiel ist die erste Dichtungsnut zur Abdichtung des Innenraums der Pumpe gegen den Umgebungsdruck angeordnet. Da diese Dichtungsnut über die gesamte axiale Länge der Pumpe durchgängig - also ohne Unterbrechung - gestaltet werden kann, lässt sich hiermit eine besonders zuverlässige Abdichtung zwischen dem Innenraum der Pumpe und der Umgebung realisieren.

Die zweite Dichtungsnut ist vorzugsweise zur Abdichtung zwischen zwei Druckräumen in der Pumpe angeordnet, in welchen im Betriebszustand verschiedene Drücke herrschen.

Eine weitere vorteilhafte Massnahme besteht darin, dass die Einmündung eine Ausnehmung aufweist, die sich parallel zur Längsausdehnung des Verbindungselements erstreckt.

In diese Ausnehmung kann dann optional ein elastisches Vorspannelement eingelegt sein, welches eine Vorspannung auf eines der schnurförmige Dichtungselemente ausübt. Diese Massnahme bietet den Vorteil, dass auch schon bei kleineren Betriebsdrücken, also beispielsweise beim Anfahren der Pumpe, von Beginn an eine sehr gute Dichtwirkung erzielt wird. Ferner resultiert der Vorteil, dass nach längerer Betriebsdauer der Pumpe, wenn Degradationen oder sonstige Veränderungen in den schnurförmigen Dichtungselementen auftreten können, das elastische Vorspannelement diese Veränderungen kompensiert und die Dichtungselemente zuverlässig gegen die Wandung der Ausnehmung des Verbindungselements drückt. Auch bei der Montage der Pumpe ist diese Massnahme vorteilhaft, weil beispielsweise ein freies Ende des schnurförmigen Dichtungselements im Bereich der Einmündung quasi eingeklemmt und somit in der gewünschten Position gehalten wird.

Vorzugsweise ist das Vorspannelement federelastisch und erstreckt sich parallel zu einem der schnurförmigen Dichtungselemente. Besonders bevorzugt ist das Vorspannelement als Feder ausgestaltet.

Bezüglich des Materials ist es bevorzugt, wenn die schnurförmigen Dichtungselemente aus einem Elastomer, insbesondere aus einem Nitrilkautschuk, speziell aus Nitril-Butadien-Kautschuk NBR gefertigt sind.

Die erfindungsgemässe Pumpe eignet sich insbesondere auch für sehr hohe Betriebsdrücke und kann vorzugsweise als Zentrifugalpumpe mit einem Auslegungsdruck von mindestens 50 bar, vorzugsweise mindestens 100 bar ausgestaltet werden.

In einer bevorzugten Anwendung ist die erfindungsgemässe Pumpe als mehrstufige Pumpe ausgestaltet.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen, teilweise im Schnitt:
- Fig. 1:: eine schematische Darstellung einer T-förmigen Kontaktstelle zwischen zwei Dichtungselementen,
- Fig.2:: ein perspektivische Darstellung eines Ausführungsbeispiels einer erfindungsgemässen Pumpe, wobei der Deckel entfernt und nur symbolisch angedeutet ist,
- Fig. 3:: eine Aufsicht auf das Unterteil des Gehäuses des Ausführungsbeispiels aus Fig. 2,
- Fig. 4:: eine schematisierte Darstellung des Details I aus Fig. 3,
- Fig. 5:: eine perspektivische Darstellung eines Ausführungsbeispiels eines Verbindungselements,
- Fig. 6:: einen Querschnitt durch das Verbindungselement mit eingelegten Dichtungselementen, und
- Fig. 7:: eine Variante für das Ausführungsbeispiel aus Fig. 2 in einer zu Fig. 4 analogen Darstellung.

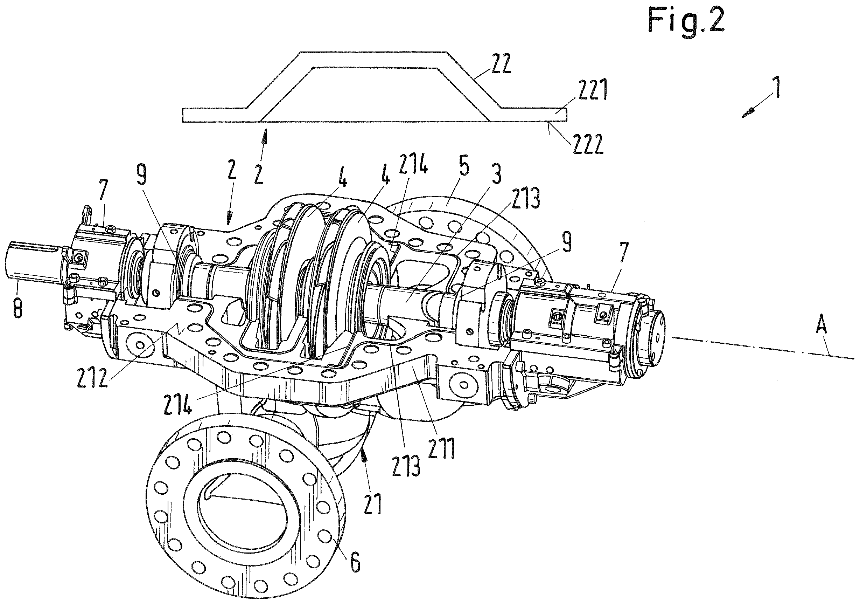

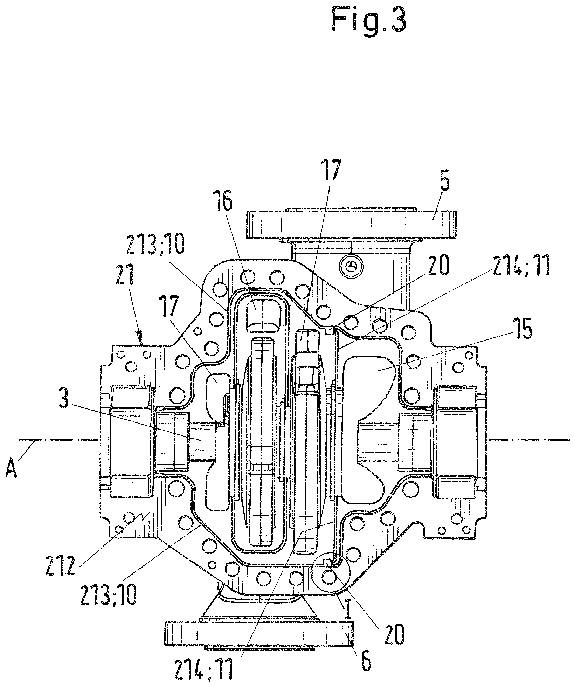

Fig. 2 zeigt in einer perspektivischen Darstellung ein Ausführungsbeispiel einer erfindungsgemässen axial geteilten Pumpe, die gesamthaft mit dem Bezugszeichen 1 bezeichnet ist. Die Pumpe 1 umfasst ein Gehäuse 2, das axial geteilt ist, und ein Unterteil 21 sowie einen Deckel 22 umfasst. Zum besseren Verständnis ist in Fig. 2 der Deckel 22 entfernt und nur symbolisch angedeutet. Fig. 3 zeigt eine Aufsicht auf das Unterteil 21 des Gehäuses 2 dieses Ausführungsbeispiels.

Das Gehäuse 2 umfasst einen Einlass 5 zum Ansaugen eines zu fördernden Fluids sowie einen Auslass 6 für das Fluid. Ferner umfasst die Pumpe 1 eine rotierbare Welle 3, deren Längsrichtung eine axiale Richtung A festlegt. Auf der Welle 3 ist mindestens ein Laufrad 4, im vorliegenden Fall sind es zwei Laufräder 4, drehfest montiert, welche das Fluid vom Einlass 5 zum Auslass 6 fördert. Ferner ist an den beiden Enden bezüglich der axialen Richtung Ader Pumpe 1 jeweils eine Lagervorrichtung 7 vorgesehen, um die Welle 3 der Pumpe 1 zu lagern. Die darstellungsgemäss linke Lagervorrichtung 7 (Fig. 1) ist ferner mit einer Kupplung 8 versehen, die mit einem nicht dargestellten Antrieb verbindbar ist, welcher die Welle 3 der Pumpe 1 in Rotation versetzt.

Mit dem Begriff axial geteilte Pumpe 1 bzw. axial geteiltes Gehäuse 2 ist wie allgemein üblich gemeint, dass das Gehäuse 2 parallel zur Längsrichtung der Welle 3 geteilt ist, also in einer Ebene, welche die Längsachse der Welle 3 enthält.

Im speziellen handelt es sich bei der in den Fig. 2 und Fig. 3 dargestellten Pumpe 1 um eine axial geteilte mehrstufige - hier zweistufige Zentrifugalpumpe, die einflutig ausgestaltet ist und in einer sogenannte Between-Bearing-Anordnung, d. h. die Laufräder 4 befinden sich zwischen den Lagervorrichtungen 7. Es versteht sich, dass die Erfindung nicht auf solche Pumpentypen beschränkt ist, sondern auch für alle anderen Pumpen mit axial geteiltem Gehäuse 1 geeignet ist, beispielsweise einstufige Pumpen, also solche mit nur einem Laufrad 4, doppelflutige Pumpen mit einstufiger oder mehrstufiger Ausgestaltung oder andere Pumpentypen als Zentrifugalpumpen.

Bezüglich der axialen Richtung A ist das Gehäuse 2 der Pumpe 1 jeweils durch einen Seitendeckel 9 verschlossen, der im vorliegenden Fall gleichzeitig den Abschlussdeckel einer mechanischen Wellendichtung darstellt.

Der Deckel 22 und das Unterteil 21 des Gehäuses 2 sind im montierten Zustand in direktem Kontakt miteinander, das heisst zwischen diesen beiden Teilen ist keine Flachdichtung vorgesehen, welche den direkten Kontakt zwischen dem Unterteil 21 und dem Deckel 22 verhindert. Dazu umfasst das Unterteil 21 einen ersten Flansch 211, der sich im montierten Zustand in der Ebene der axialen Teilung des Gehäuses 2 erstreckt und dessen darstellungsgemäss obere Oberfläche eine erste Dichtfläche 212 bildet. In sinngemäss gleicher Weise ist der Deckel 22 mit einem zweiten Flansch 221 versehen, der sich im montierten Zustand in der Ebene der axialen Teilung des Gehäuses 2 erstreckt und dessen darstellungsgemäss untere Oberfläche (Fig. 2) eine zweite Dichtfläche 222 bildet.

Nach Montage des Deckels 22 auf dem Unterteil 21 stehen die erste Dichtfläche 212 und die zweite Dichtfläche 222 in direktem Kontakt miteinander, um eine dichtende Verbindung zwischen dem Unterteil 21 und dem Deckel 22 des Gehäuses 2 zu bilden. In der ersten Dichtfläche 212 des Unterteils 21 ist eine erste Dichtungsnut 213 vorgesehen, welche sich von dem darstellungsgemäss linken Seitendeckel 9 in axialer Richtung A der inneren Kontur der Pumpe 1 folgend bis zu dem anderen Seitendeckel 9 erstreckt. Diese erste Dichtungsnut 213 ist auf beiden Seiten der Welle 3 vorgesehen. In die erste Dichtungsnut 213 ist ein erstes schnurförmiges Dichtungselement 10 eingelegt, welches sich über die gesamte Länge der ersten Dichtungsnut 213 erstreckt und welches den Innenraum der Pumpe 1 gegenüber der Umgebung abdichtet. Daher wird die erste Dichtungsnut 213 auch als äussere Dichtungsnut 213 bezeichnet. Das erste schnurförmige Dichtungselement 10 hat üblicherweise einen runden Querschnitt, so wie es beispielsweise von handelsüblichen O-Ringen bekannt ist. Natürlich ist es auch möglich, dass das schnurförmige Dichtungselement einen anderen Querschnitt aufweist, beispielsweise einen rechteckigen und insbesondere einen quadratischen Querschnitt. Dabei ist das erste schnurförmige Dichtungselement 10 bezüglich seines Durchmessers so bemessen, dass es im unmontierten Zustand über den Rand der ersten Dichtungsnut 213 hinaussteht. Bei der Montage des Deckels 22 auf das Unterteil 21 wird somit das erste schnurförmige Dichtungselement 10 elastisch verformt und sorgt somit für eine zuverlässige Abdichtung zwischen dem Unterteil 21 und dem Deckel 22 des Gehäuses 2.

Die Befestigung des Deckels 22 auf dem Unterteil 21 erfolgt vorzugsweise mittels Bolzen oder Schrauben, welche durch die in der ersten Dichtfläche 212 vorgesehene Bohrungen oder Gewindebohrungen (ohne Bezugszeichen in Fig. 2 und Fig. 2) greifen, sodass das Unterteil 21 und der Deckel 22 fest und dichtend miteinander verschraubt sind.

Die Pumpe 1 ist im vorliegenden Ausführungsbeispiel als zweistufige Zentrifugalpumpe ausgestaltet. Es existieren somit im Innern der Pumpe 1 mehrere Druckräume, in denen im Betriebszustand unterschiedliche Drücke herrschen (siehe Fig. 3): In einem Saugraum 15 der Pumpe 1 herrscht der Saugdruck, der am Einlass 5 der Pumpe 1 anliegt, in einem Auslassraum 16 herrscht der Förderdruckdruck, mit welchem das Fluid am Auslass 6 der Pumpe zur Verfügung steht. In einem Zwischenraum 17 herrscht ein Zwischendruck, dessen Betrag zwischen dem Saugdruck und dem Förderdruck liegt. Bei der zweistufigen Pumpe 1 wird das zu fördernde Fluid vom Einlass 5 kommend durch das darstellungsgemäss rechte Laufrad 4 der ersten Stufe in den Zwischenraum 17 gefördert und dabei auf den Zwischendruck gebracht. Von dem Zwischenraum 17 fördert das darstellungsgemäss linke Laufrad 4 der zweiten Stufe das Fluid in den Auslassraum 16, wo es dann unter dem Förderdruck steht und am Auslass 6 der Pumpe 1 zur Verfügung steht.

Zur Abdichtung zwischen den verschiedenen Druckräumen in der Pumpe 1 sind weitere Dichtungsnuten vorgesehen. In dem Unterteil 21 ist mindestens eine zweite Dichtungsnut 214 vorgesehen, welche auch als innere Dichtungsnut 214 bezeichnet wird, weil sie der Abdichtung zwischen verschiedenen Druckräumen in der Pumpe dient, im vorliegenden Ausführungsbeispiel dient die zweite Dichtungsnut 214 der Abdichtung zwischen dem Saugraum 15 und dem Zwischenraum 17. Wie dies insbesondere Fig. 3 zeigt, ist die zweite Dichtungsnut 214 ebenfalls auf beiden Seiten der Welle 3 vorgesehen. In die zweite Dichtungsnut 214 ist ein zweites schnurförmiges Dichtungselement 11 eingelegt, welches sich über die gesamte Länge der zweiten Dichtungsnut 214 erstreckt. Auch das zweite schnurförmige Dichtungselement 11 hat üblicherweise einen runden Querschnitt, so wie es beispielsweise von handelsüblichen O-Ringen bekannt ist. Natürlich ist es auch möglich, dass das zweite schnurförmige Dichtungselement einen anderen Querschnitt aufweist, beispielsweise einen rechteckigen und insbesondere einen quadratischen Querschnitt. Dabei ist das zweite schnurförmige Dichtungselement 11 bezüglich seines Durchmessers so bemessen, dass es im unmontierten Zustand über den Rand der zweiten Dichtungsnut 214 hinaussteht. Bei der Montage des Deckels 22 auf das Unterteil 21 wird somit das zweite schnurförmige Dichtungselement 11 elastisch verformt und sorgt somit für eine zuverlässige Abdichtung zwischen dem Saugraum 15 und dem Zwischenraum 17.

Alternativ ist es auch möglich, die erste und/oder die zweite Dichtungsnut 213 bzw. 214 so wie gegebenenfalls weitere Dichtungsnuten im Deckel 22 des Gehäuses 2 vorzusehen, oder sowohl im Unterteil 21 als auch im Deckel 22 Dichtungsnuten vorzusehen. Aus fertigungs- und montagetechnischen Gründen ist es bevorzugt, wenn alle Dichtungsnuten 213, 214 nur im Unterteil 21 vorgesehen sind.

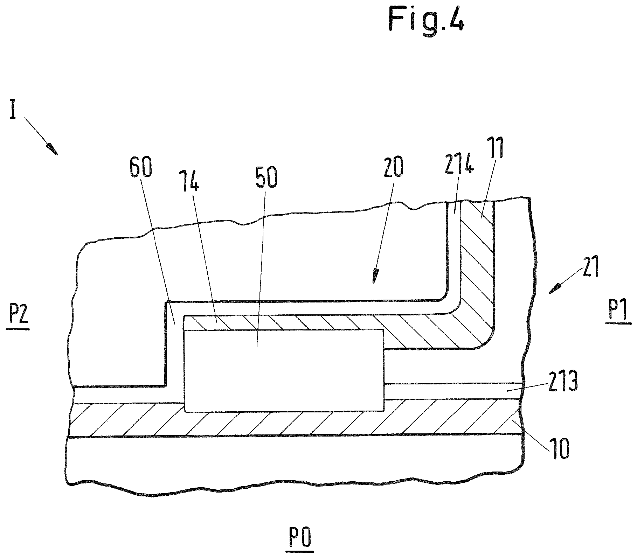

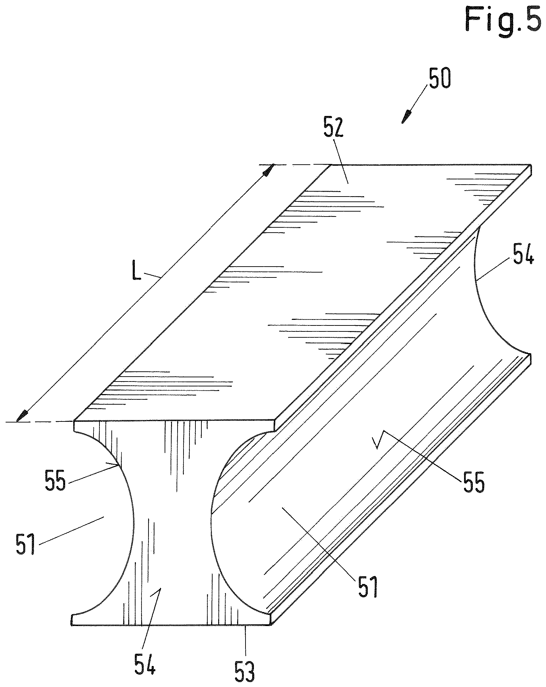

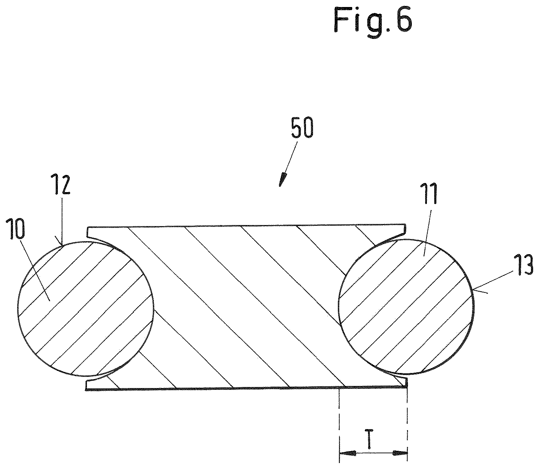

Wie dies insbesondere Fig. 3 zeigt, erstreckt sich die zweite Dichtungsnut 214 in der zur axialen Richtung senkrechten radialen Richtung. Die zweite Dichtungsnut 214 ist durch eine Einmündung 20 mit der ersten Dichtungsnut 213 verbunden, damit die beiden Dichtungselemente 10 und 11 zusammenwirken bzw. verbunden werden können. Dies wird im Folgenden näher erläutert. Dazu zeigt Fig. 4 in einer vergrösserten und schematisierten Darstellung des Details I aus Fig. 3 den Bereich der Einmündung 20 der zweiten Dichtungsnut 214 in die erste Dichtungsnut 213. Zum besseren Verständnis sind in Fig. 4 das erste und das zweite schnurförmige Dichtungselement 10 bzw. 11 jeweils schraffiert dargestellt. Erfindungsgemäss ist in der Einmündung 20 ein Verbindungselement 50 vorgesehen. Zum besseren Verständnis zeigt Fig. 5 eine perspektivische Darstellung eines Ausführungsbeispiels des Verbindungselements 50 und Fig. 6 einen Querschnitt durch das Verbindungselement 50, wobei in Fig. 6 die beiden schnurförmigen Dichtungselemente 10, 11 in das Verbindungselement 50 eingelegt sind.

Das Verbindungselement 50 hat eine rechteckige Unterseite 53 und eine dazu parallele rechteckige Oberseite 52, welche durch zwei Endflächen 54 verbunden sind. Seine Längserstreckung ist als Länge L bezeichnet. Das Verbindungselement 50 weist zwei laterale Ausnehmungen 51 auf, die sich jeweils über die gesamte Länge L zwischen den Endflächen 54 erstrecken. Die lateralen Ausnehmungen 51 sind zur Aufnahme je eines schnurförmigen Dichtungselements 10 bzw. 11 ausgestaltet und können - je nach Dichtungselement- identisch oder unterschiedlich ausgebildet sein. Die beiden lateralen Ausnehmungen 51 verlaufen parallel zueinander, sodass die beiden schnurförmigen Dichtungselemente 10 bzw. 11 nach ihrem Einlegen in die Ausnehmungen 51 im Bereich des Verbindungsstücks 50 parallel oder zumindest im wesentlichen parallel zueinander liegen.

Jede der Ausnehmungen 51 weist eine innere Kontur 55 auf, welche jeweils der Mantelfläche 12 bzw. 13 des jeweiligen schnurförmigen Dichtungselements 10 bzw. 11 folgt, welches in die Ausnehmung 51 eingelegt ist. Haben beispielsweise die Dichtungselemente 10, 11 eine kreisförmige Querschnittsfläche - wie in Fig. 6 dargestellt - so ist die innere Kontur 55 der Ausnehmungen 51 senkrecht zur Längserstreckung der Ausnehmung 51 ebenfalls kreisbogenförmig gekrümmt, wobei der Krümmungsradius im wesentlichen dem des jeweiligen Dichtungselements 10, 11 entspricht.

Aus dieser Massnahme resultiert ein möglichst grossflächiger Kontakt zwischen dem jeweiligen Dichtungselement 10, 11 und dem Verbindungsstück 50.

Die Tiefe T der Ausnehmung 51 senkrecht zu ihrer Längserstreckung kann je nach Anwendungsfall angepasst werden. Bei Dichtungselementen 10, 11 mit kreisförmigem Querschnitt hat es sich in der Praxis jedoch als hinreichend erwiesen, wenn die Ausnehmung 51 höchstens die Hälfte, vorzugsweise weniger als die Hälfte der Mantelfläche 12, 13 des Dichtungselements 10, 11 kontaktiert. Je nach Anwendungsfall und Ausgestaltung des jeweiligen Dichtungselements kann die Tiefe T für die beiden Ausnehmung 51 unterschiedlich sein. Auch kann die Krümmung der inneren Kontur 55 für die beiden Ausnehmungen 51 unterschiedlich sein. Im vorliegenden Ausführungsbeispiel ist die Tiefe T und die Krümmung der inneren Kontur 55 für die beiden Ausnehmungen 51 gleich.

Wie dies Fig. 4 zeigt, ist im Bereich der Einmündung 20 eine Erweiterung 60 der beiden Dichtungsnuten 213, 214 vorgesehen, in welche das Verbindungselement 50 eingelegt werden kann. Das erste schnurförmige Dichtungselement 10 ist im Bereich des Verbindungselements 50 durchgängig, das heisst, es muss weder aufgeschnitten noch in sonst einer Weise manipuliert werden, sondern wird einfach in die entsprechende Ausnehmung 51 eingelegt.

Das zweite schnurförmige Dichtungselement 11 hat im Bereich der Einmündung 20 ein Ende 14. Dieses gerade Ende 14 wird in die andere der beiden Ausnehmungen 51 eingelegt und verläuft somit im Bereich des Verbindungselements 50 parallel zu dem ersten schnurförmigen Dichtungselement 10. Das zweite Dichtungselement 11 wird bezüglich seiner Länge vorzugsweise so bemessen, dass sein Ende 14 nach dem Einlegen in die Ausnehmung 51 im wesentlichen bündig mit der Endfläche 54 des Verbindungselements 50 abschliesst. Somit ist ein möglichst grossflächiger, dichtender Kontakt zwischen dem jeweiligen Dichtungselement 10, 11 und der es aufnehmenden Ausnehmung 51 gewährleistet.

Die insbesondere in Fig. 4 veranschaulichte Anordnung ermöglicht das Ersetzen von sonst T-förmigen Verbindungen oder Kontaktstellen zwischen separaten Dichtungselementen 10, 11 durch eine besonders gut dichtende Verbindung, bei welcher die beiden Dichtungselemente 10, 11 im Bereich der Einmündung 20 parallel zueinander geführt werden.

Im Betriebszustand herrscht auf der in Fig. 4 darstellungsgemäss rechten Seite des zweiten schnurförmigen Dichtungselements 11 ein kleinerer Druck P1 als auf der darstellungsgemäss linken Seite, wo der Druck P2 herrscht. Darstellungsgemäss unterhalb des ersten Dichtungselements 10 herrscht dann ausserhalb des Gehäuses 2 der Umgebungs- bzw. der Atmosphärendruck P0. Durch die Druckdifferenzen werden einerseits die beiden Dichtungselemente 10, 11 dichtend gegen die Wandung der ersten bzw. der zweiten Dichtungsnut 213, 214 gedrückt, andererseits presst die Druckdifferenz das zweite Dichtungselement 11 gegen die innere Kontur 55 der Ausnehmung 51, woraus auch eine durch das Verbindungselement 50 vermittelte Kraftwirkung auf das erste Dichtungselement 10 erfolgt, das dadurch gegen die Wandung der ersten Dichtungsnut 213 gedrückt wird.

Die geeignete Länge L für das Verbindungselement 50 ergibt sich je nach Anwendungsfall, es hat sich jedoch in der Praxis bewährt, wenn die Ausnehmungen 51 jeweils eine Länge L aufweisen , die mindestens so gross ist, wie der dreifache Durchmesser des eingelegten Dichtungselements 10 bzw. 11.

Das Verbindungselement 50 ist vorzugsweise aus einem Kunststoff gefertigt und kann beispielsweise ein Spritzgussteil sein. Während primär die Formgebung des Verbindungselements 50 für einen möglichst guten Kontakt mit dem jeweiligen Dichtungselement 10 bzw. 11 ist massgeblich ist, so kann es doch vorteilhaft sein, wenn das Verbindungselement 50 elastisch verformbar ist.

Als Material sowohl für das erste schnurförmige Dichtungselement 10 als auch für das zweite schnurförmige Dichtungselement 11 eignen sich insbesondere alle an sich bekannten Materialien, die für derartig Dichtungen eingesetzt werden, insbesondere Elastomere wie Nitrilkautschuk und speziell Nitril-Butadien-Kautschuk (NBR).

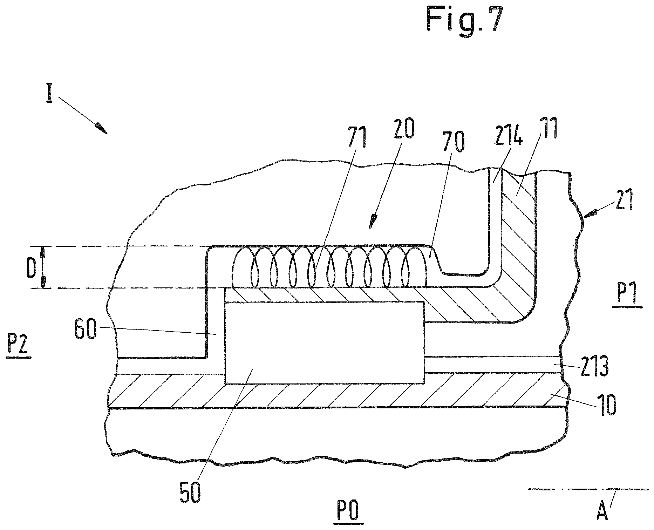

Fig. 7 veranschaulicht in einer zu Fig. 4 analogen Darstellung eine besonders bevorzugte Variante für die Ausgestaltung der erfindungsgemässen Pumpe 1. Im Folgenden wird nur auf die Unterschiede zu dem beschriebenen Ausführungsbeispiel eingegangen. Ansonsten gelten die voranstehenden Erläuterungen in gleicher oder sinngemäss gleicher Weise auch für diese Variante. Insbesondere haben die Bezugszeichen für gleiche oder von der Funktion her gleichwertige Teile die gleiche Bedeutung.

Bei der in Fig. 7 dargestellten Variante weist die Einmündung 20 zusätzlich eine Ausnehmung 70 auf, die sich parallel zur Längserstreckung bzw. zur Längsausdehnung des Verbindungselements 50 erstreckt. In die Ausnehmung 70 ist vorzugsweise ein elastisches Vorspannelement 71 eingelegt, welches eine Vorspannung auf eines - hier das zweite - schnurförmige Dichtungselement 11 ausübt. Diese Vorspannung überträgt sich vermittelt durch das Verbindungselement 50 auch auf das andere - hier das erste - Dichtungselement 10. Die Anordnung des Vorspannelements 71 bzw. der Ausnehmung 70 ist dabei so, das die Vorspannung in Richtung des abnehmenden Drucks generiert wird, also in der Darstellung gemäss Fig. 7 nach unten. Bevorzugt ist das Vorspannelement 71 federelastisch, und insbesondere bevorzugt als Feder ausgestaltet. Die Feder 71 erstreckt sich parallel zu dem zweiten schnurförmigen Dichtungselement 11 und ist so bemessen, dass sie bezüglich der radialen Richtung breiter ist als die Breite D der Ausnehmung 70.

Die Variante mit dem Vorspannelement 71 bietet mehrere Vorteile. Während des Betriebs der Pumpe 1 gewährleistet das Vorspannelement 71 einen zusätzlichen Beitrag, dass auch bei kleineren Betriebsdrücken, also beispielsweise beim Anfahren der Pumpe 1, sofort eine ausreichende Dichtwirkung zwischen dem Gehäuse 2 der Pumpe 1 und der Umgebung bzw. zwischen dem Saugraum 15 und dem Zwischenraum 17 realisiert ist. Auch im Hinblick auf den Langzeitbetrieb der Pumpe 1 ist das Vorspannelement 71 vorteilhaft. Kommt es nämlich mit zunehmender Betriebsdauer der Pumpe 1 zu Degradationen, Ermüdungen oder sonstigen Änderungen oder Abnutzungserscheinungen der schnurförmigen Dichtungselemente 10 bzw. 11, so können diese durch die Wirkung des Vorspannelements 71 kompensiert werden, weil dieses die schnurförmigen Dichtungselemente 10 bzw. 11 zuverlässig gegen das Verbindungselement 50 bzw. die Wand der Dichtungsnut 214 drückt.

Die verbesserte Dichtwirkung an der Verbindungsstelle zwischen individuellen Dichtungselementen 10, 11 ist insbesondere auch im Hinblick auf einen möglichst hohen Betriebsdruck der Pumpe 1 vorteilhaft. So kann die Pumpe 1, beispielsweise in einer Ausgestaltung als Zentrifugalpumpe, mit einem Auslegungsdruck von mindestens 50 bar und vorzugsweise mindestens 100 bar konzipiert werden.

Auch wenn die Erfindung nur unter näherer Bezugnahme auf eine Verbindungsstelle zwischen zwei separaten Dichtungselementen erläutert ist, versteht es sich natürlich, dass auch an anderen oder weiteren Verbindungs- oder Kontaktstellen zwischen Dichtungselementen die Abdichtung in gleicher oder sinngemäss gleicher Weise realisiert sein kann. Selbstverständlich eignet sich die Erfindung auch für solche mehrstufigen Pumpen, die mehr als zwei Stufen aufweisen.

## Patentansprüche

1. Axial geteilte Pumpe zum Fördern eines Fluids mit einem axial geteilten Gehäuse (2), welches ein Unterteil (21) und einen Deckel (22) umfasst, wobei das Unterteil (21) eine erste Dichtfläche (212) aufweist und der Deckel (22) eine zweite Dichtfläche (222), wobei das Unterteil (21) und der Deckel (22) derart aneinander befestigbar sind, dass die beiden Dichtflächen (212, 222) direkten Kontakt miteinander haben, wobei in den Dichtflächen (212, 222) eine erste Dichtungsnut (213) zur Aufnahme eines ersten schnurförmigen Dichtungselements (10) vorgesehen ist, sowie eine zweite Dichtungsnut (214) zur Aufnahme eines zweiten schnurförmigen Dichtungselements (11), welche zweite Dichtungsnut (214) durch eine Einmündung (20) mit der ersten Dichtungsnut (213) verbunden ist, wobei in der Einmündung (20) ein Verbindungselement (50) vorgesehen ist, welches zwei laterale Ausnehmungen (51) zur Aufnahme jeweils eines der schnurförmigen Dichtungselemente (10,11) aufweist, **dadurch gekennzeichnet, dass** die Ausnehmungen (51) so angeordnet und ausgestaltet sind, dass die beiden schnurförmigen Dichtungselemente (10, 11) im gesamten Bereich des Verbindungselements (50) im wesentlichen parallel verlaufen können.

2. Pumpe nach Anspruch 1, bei welcher in die erste Dichtungsnut (213) ein erstes schnurförmiges Dichtungselement (10) eingelegt ist und in die zweite Dichtungsnut (214) ein zweites schnurförmiges Dichtungselement (11) eingelegt ist, und bei welcher jede der zwei lateralen Ausnehmungen (51) des Verbindungselements (50) jeweils eines der schnurförmigen Dichtungselemente (10, 11) aufnimmt.

3. Pumpe nach einem der vorangehenden Ansprüche, wobei eine der beiden Ausnehmungen (51) ein gerades Ende (14) eines der schnurförmigen Dichtungselemente (10, 11) aufnimmt.

4. Pumpe nach einem der vorangehenden Ansprüche, wobei jede der Ausnehmungen (51) eine innere Kontur (55) aufweist, welche jeweils der Mantelfläche (12, 13) des jeweiligen schnurförmigen Dichtungselements (10, 11) folgt.

5. Pumpe nach einem der vorangehenden Ansprüche, wobei die Ausnehmungen (51) in dem Verbindungselement (50) jeweils eine Länge (L) aufweisen, die mindestens so gross ist, wie der dreifache Durchmesser des eingelegten Dichtungselements (10, 11).

6. Pumpe nach einem der vorangehenden Ansprüche, bei welcher jede Dichtungsnut (213, 214) im Unterteil (21) des Gehäuses (2) vorgesehen ist.

7. Pumpe nach einem der vorangehenden Ansprüche, bei welcher das Verbindungselement (50) aus einem Kunststoff gefertigt ist.

8. Pumpe nach einem der vorangehenden Ansprüche, bei welcher die erste Dichtungsnut (213) zur Abdichtung des Innenraums der Pumpe gegen den Umgebungsdruck angeordnet ist.

9. Pumpe nach einem der vorangehenden Ansprüche, bei welcher die zweite Dichtungsnut (214) zur Abdichtung zwischen zwei Druckräumen (15, 17) in der Pumpe angeordnet ist, in welchen im Betriebszustand verschiedene Drücke herrschen.

10. Pumpe nach einem der vorangehenden Ansprüche, wobei die Einmündung (20) eine Ausnehmung (70) aufweist, die sich parallel zur Längsausdehnung des Verbindungselements (50) erstreckt.

11. Pumpe nach Anspruch 10, wobei in die Ausnehmung (70) ein elastisches Vorspannelement (71) eingelegt ist, welches eine Vorspannung auf eines der schnurförmigen Dichtungselemente (11) ausübt.

12. Pumpe nach Anspruch 10 oder 11, bei welcher das Vorspannelement (71) federelastisch ist und sich parallel zu einem der schnurförmigen Dichtungselemente (11) erstreckt und vorzugsweise als Feder (71) ausgestaltet ist.

13. Pumpe nach einem der vorangehenden Ansprüche, bei welcher die schnurförmigen Dichtungselemente (10, 11) aus einem Elastomer, insbesondere aus einem Nitrilkautschuk, speziell aus Nitril-Butadien-Kautschuk NBR gefertigt sind.

14. Pumpe nach einem der vorangehenden Ansprüche, ausgestaltet als Zentrifugalpumpe mit einem Auslegungsdruck von mindestens 50 bar, vorzugsweise mindestens 100 bar.

15. Pumpe nach einem der vorangehenden Ansprüche ausgestaltet als mehrstufige Pumpe.

## Claims

1. An axially split pump for conveying a fluid, having an axially split housing (2) that comprises a bottom part (21) and a cover (22), wherein the bottom part (21) has a first sealing surface (212) and the cover (22) has a second sealing surface (222), wherein the bottom part (21) and the cover (22) can be fastened to one another in such a way that the two sealing surfaces (212, 222) have direct contact with one another, wherein a first sealing groove (213) for the reception of a first string-like sealing element (10) is provided in the sealing surfaces (212, 222), and a second sealing groove (214) is provided for the reception of a second string-like sealing element (11), the second sealing groove (214) being connected to the first sealing groove (213) via an opening (20), wherein a connection element (50) is provided in the opening (20), the connection element having two lateral cut-outs (51) for the reception of respective one of the string-like sealing elements (10, 11), **characterized in that** the cut-outs (51) are arranged and configured in such a way that the two string-like sealing elements (10, 11) can run substantially in parallel in the entire region of the connection elements (50).

2. A pump in accordance with claim 1, in which a first string-like sealing element (10) is inserted into the first sealing groove (213), and a second string-like sealing element (11) is inserted into the second sealing groove (214), and in which each of the two lateral cut-outs (51) of the connection element (50) respectively receives one of the string-like sealing elements (10, 11).

3. A pump in accordance with one of the preceding claims, wherein one of the two cut-outs (51) receives a straight end (14) of one of the string-like sealing elements (10, 11).

4. A pump in accordance with any one of the preceding claims, wherein each of the cut-outs (51) has an inner contour (55) which respectively follows the jacket surface (12, 13) of the respective string-like sealing element (10, 11).

5. A pump in accordance with any one of the preceding claims, wherein the cut-outs (51) in the connection element (50) have a respective length (L), the length being at least as large as three times the diameter of the inserted sealing element (10, 11).

6. A pump in accordance with any one of the preceding claims, in which each sealing groove (213, 214) is provided in the bottom part (21) of the housing (2).

7. A pump in accordance with any one of the preceding claims, in which the connection element (50) is manufactured from a plastic.

8. A pump in accordance with any one of the preceding claims, in which the first sealing groove (213) is arranged for sealing the inner space of the pump against the environmental pressure.

9. A pump in accordance with any one of the preceding claims, in which the second sealing groove (214) is arranged for sealing between two pressure spaces (15, 17) in the pump, in which pressure spaces different pressures are present in the operating state.

10. A pump in accordance with any one of the preceding claims, wherein the opening (20) has a cut-out (70) that extends in parallel with the longitudinal extent of the connection element (50).

11. A pump in accordance with claim 10, wherein an elastic pre-load element (71) is inserted into the cut-out (70), the elastic pre-loading element exerting a pre-load on one of the string-like sealing elements (11).

12. A pump in accordance with claim 10 or claim 11, in which the pre-loading element (71) is spring elastic and extends in parallel with one of the string-like sealing elements (11) and is preferably configured as a spring (71).

13. A pump in accordance with any one of the preceding claims, in which the string-like sealing element (10, 11) is produced from an elastomer, in particular from a nitrile rubber, specifically from a nitrile butadiene rubber (NBR).

14. A pump in accordance with any one of the preceding claims configured as a centrifugal pump having a design pressure of at least 50 bar, preferably of at least 100 bar.

15. A pump in accordance with any one of the preceding claims configured as a multi-stage pump.

## Revendications

1. Une pompe à joint axial pour transporter un fluide, avec un boîtier à joint axial (2) qui comprend une partie inférieure (21) et un couvercle (22), dans laquelle la partie inférieure (21) présente une première surface d'étanchéité (212) et le couvercle (22) présente une deuxième surface d'étanchéité (222), dans laquelle la partie inférieure (21) et le couvercle (22) peuvent être fixés l'un à l'autre de telle sorte que les deux surfaces d'étanchéité (212, 222) sont en contact direct l'une avec l'autre, dans laquelle une première rainure d'étanchéité (213) est prévue dans les surfaces d'étanchéité (212, 222) pour recevoir un premier élément d'étanchéité en forme de cordon (10), et une deuxième rainure d'étanchéité (214) pour recevoir un deuxième élément d'étanchéité en forme de cordon (11), ladite deuxième rainure d'étanchéité (214) est connectée à la première rainure d'étanchéité (213) par un orifice (20), dans laquelle un élément de connexion (50) est prévu dans l'orifice, ledit élément de connexion (50) présente deux évidements latéraux (51) pour recevoir chacun des éléments d'étanchéité en forme de cordon (10, 11), **caractérisé en ce que** les évidements (51) sont disposés et configurés de telle sorte que les deux éléments d'étanchéité en forme de cordon (10, 11) peuvent s'étendre sensiblement parallèlement dans toute la région de l'élément de connexion (50).

2. Une pompe selon la revendication 1, dans laquelle un premier élément d'étanchéité en forme de cordon (10) est inséré dans la première rainure d'étanchéité (213) et un deuxième élément d'étanchéité en forme de cordon (11) est inséré dans la deuxième rainure d'étanchéité (214), et dans laquelle chacun des deux évidements latéraux (51) de l'élément de connexion (50) reçoit respectivement l'un des éléments d'étanchéité en forme de cordon (10, 11).

3. Une pompe selon l'une des revendications précédentes, dans laquelle l'un des deux évidements (51) reçoit une extrémité droite (14) de l'un des éléments d'étanchéité en forme de cordon (10, 11).

4. Une pompe selon l'une des revendications précédentes, dans laquelle chacun des évidements (51) présente un contour intérieur (55) qui suit respectivement la surface périphérique (12, 13) de l'élément d'étanchéité en forme de cordon respectif (10, 11).

5. Une pompe selon l'une des revendications précédentes, dans laquelle les évidements (51) dans l'élément de connexion (50) présentent chacun une longueur (L) au moins aussi grande que trois fois le diamètre de l'élément d'étanchéité inséré (10, 11).

6. Une pompe selon l'une des revendications précédentes, dans laquelle chaque rainure d'étanchéité (213, 214) est prévue dans la partie inférieure (21) du boîtier (2).

7. Une pompe selon l'une des revendications précédentes, dans laquelle l'élément de connexion (50) est fabriqué en matière plastique.

8. Une pompe selon l'une des revendications précédentes, dans laquelle la première rainure d'étanchéité (213) est disposée pour étancher l'intérieur de la pompe contre la pression ambiante.

9. Une pompe selon l'une des revendications précédentes, dans laquelle la deuxième rainure d'étanchéité (214) est disposée pour l'étanchéité entre deux chambres de pression (15, 17) de la pompe dans laquelle des pressions différentes prévalent à l'état de fonctionnement.

10. Une pompe selon l'une des revendications précédentes, dans laquelle l'orifice (20) présente un évidement (70) s'étendant parallèlement à l'étendue longitudinale de l'élément de connexion (50).

11. Une pompe selon la revendication 10, dans laquelle un élément de précontrainte élastique (71) est inséré dans l'évidement (70), qui exerce une précontrainte sur l'un des éléments d'étanchéité en forme de cordon (11).

12. Une pompe selon la revendication 10 ou 11, dans laquelle l'élément de précontrainte (71) est résilient et s'étend parallèlement à l'un des éléments d'étanchéité en forme de cordon (11) et est de préférence configuré comme un ressort (71).

13. Une pompe selon l'une des revendications précédentes, dans laquelle les éléments d'étanchéité en forme de cordon (10, 11) sont fabriqués d'un élastomère, en particulier d'un caoutchouc nitrile, particulièrement de caoutchouc butadiène-nitrile NBR.

14. Une pompe selon l'une des revendications précédentes, configurée comme une pompe centrifuge avec une pression nominale d'au moins 50 bars, de préférence d'au moins 100 bars.

15. Une pompe selon l'une des revendications précédentes, configurée comme une pompe à plusieurs étages.
